# EUROPÄISCHE PATENTSCHRIFT

(11) **EP 3 163 721 B1**
(45) Veröffentlichungstag und Bekanntmachung des Hinweises auf die Patenterteilung: **01.05.2019**
(21) Anmeldenummer: 16187262.7
(22) Anmeldetag: 05.09.2016
(51) Int. Cl.: H02K 5/22, H02K 9/197, H02K 11/33, H02K 9/19, H02K 5/20

(54) **ELEKTRISCHE MASCHINE**
ELECTRIC MACHINE
MACHINE ÉLECTRIQUE

(30) Priorität: 26.10.2015 DE 102015220852
(43) Veröffentlichungstag der Anmeldung: 03.05.2017
(73) Patentinhaber: ROBERT BOSCH GMBH, 70442 Stuttgart (DE)
(72) Erfinder: Liu, Zhengyu, 72762 Reutlingen (DE)

(56) Entgegenhaltungen:
- EP-A1- 0 642 703
- EP-A2- 1 045 149
- JP-A- 2006 197 774
- US-A1- 2012 112 568

## Beschreibung

### Stand der Technik

Die Erfindung geht aus von einer elektrischen Maschine nach der Gattung des Hauptanspruchs.

Die Arbeiten, die zu dieser Erfindung geführt haben, wurden gemäß der Finanzhilfevereinbarung Nr. 314331 im Zuge des Siebten Rahmenprogramms der Europäischen Gemeinschaft FP7-2012-ICT-GC gefördert.

Es ist schon eine elektrische Maschine aus der DE 10 2010 041 589 A1 bekannt, mit mehreren Phasenleitern, an denen jeweils Spulenwicklungen der elektrischen Maschine elektrisch angeschlossen sind, und mit elektronischen Bauelementen einer Leistungselektronik zur Bereitstellung einer Hochspannung für die elektrische Maschine, wobei die elektronischen Bauelemente jeweils über eine Phasenanschlussleitung mit einem der Phasenleiter der elektrischen Maschine elektrisch verbunden sind, wobei die Phasenanschlussleitungen durch einen in ein Gehäuse der elektrischen Maschine führenden Kabelkanal verlaufen. Außerdem ist eine Kühlkanalverbindung zwischen einem Kühlkanal der elektrischen Maschine und einem Kühlkanal der Leistungselektronik vorgesehen. Die Kühlung der Leistungselektronik ist nicht optimal, da der Kühlkanal der Leistungselektronik nur über eine einzige Öffnung mit dem Kühlkanal der elektrischen Maschine verbunden ist, so dass sich nicht zwangsweise eine Strömung vom Kühlkanal der elektrischen Maschine in den Kühlkanal der Leistungselektronik einstellt. Außerdem muss der Kabelkanal zum Kühlkanal der Leistungselektronik hin abgedichtet sein, damit kein Kühlmedium aus dem Kühlkanal der Leistungselektronik entweichen kann. Die Phasenanschlussleitungen können sich außerdem stark erwärmen, wodurch die Leistung der elektrischen Maschine begrenzt wird.

Ferner ist eine Öl-gekühlte Leistungstransistoranordnung aus der EP 0 642 703 A1 und aus der US 2012/112568 A1 bekannt.

### Vorteile der Erfindung

Die erfindungsgemäße elektrische Maschine mit den kennzeichnenden Merkmalen des Hauptanspruchs hat demgegenüber den Vorteil, dass die Kühlung der Phasenanschlussleitungen und der Leistungselektronik verbessert wird, indem die Kühlkanalverbindung derart durch den Kabelkanal führt, dass die Phasenanschlussleitungen vom Kühlmedium umströmbar sind.

Durch die in den Unteransprüchen aufgeführten Maßnahmen sind vorteilhafte Weiterbildungen und Verbesserungen der im Hauptanspruch angegebenen elektrischen Maschine möglich.

Weiterhin vorteilhaft ist, wenn der gemeinsame Kühlkanal an den elektronischen Bauelementen der Leistungselektronik entlangführt und in der elektrischen Maschine durch Statornuten eines Stators der elektrischen Maschine verläuft. Auf diese Weise kann eine Kühlung des Mantels der elektrischen Maschine entfallen, so dass das Gehäuse der elektrischen Maschine kostengünstiger herstellbar ist.

Sehr vorteilhaft ist es, wenn das Kühlmedium ein Getriebeöl ist da auf diese Weise ein dielektrisches Kühlmedium vorliegt, das eine elektrische Isolation der Phasenanschlussleitungen überflüssig machen kann.

Auch vorteilhaft ist, wenn die Phasenanschlussleitungen elektrisch nicht isoliert sind, da die Phasenanschlussleitungen auf diese Weise besser gekühlt sind. Außerdem lassen sich die Phasenanschlussleitungen kostengünstiger herstellen und elektrisch anbinden.

Desweiteren vorteilhaft ist, wenn die mehreren Phasenleiter der elektrischen Maschine nebeneinander in einer ringförmigen Phasenleiteranordnung zusammengefasst und gegeneinander elektrisch isoliert sind, da die Phasenleiter der elektrischen Maschine auf diese Weise wenig Bauraum benötigen.

Darüber hinaus vorteilhaft ist, wenn die erfindungsgemäße elektrische Maschine in oder an einem Getriebe vorgesehen ist und der gemeinsame Kühlkanal Teil eines Kühlkreises ist, der eine Kühlpumpe umfasst, die Öl aus dem Getriebe ansaugt und zum Kühlen in den gemeinsamen Kühlkanal fördert. Auf diese Weise steht als Kühlmedium das Öl des Getriebes zur Verfügung.

Außerdem vorteilhaft ist, wenn der gemeinsame Kühlkanal nach Durchlaufen der elektrischen Maschine in das Getriebe mündet, da das Öl im Getriebe von einem Ölkühler gekühlt und anschließend wieder dem Kühlkreis der Leistungselektronik und der elektrischen Maschine zugeführt werden kann.

Sehr vorteilhaft ist, wenn die Leistungselektronik vom Kühlmedium beidseitig umströmbar ist. Dieser Aufbau erlaubt eine beidseitige Kühlung der Leistungsmodule.

### Zeichnung

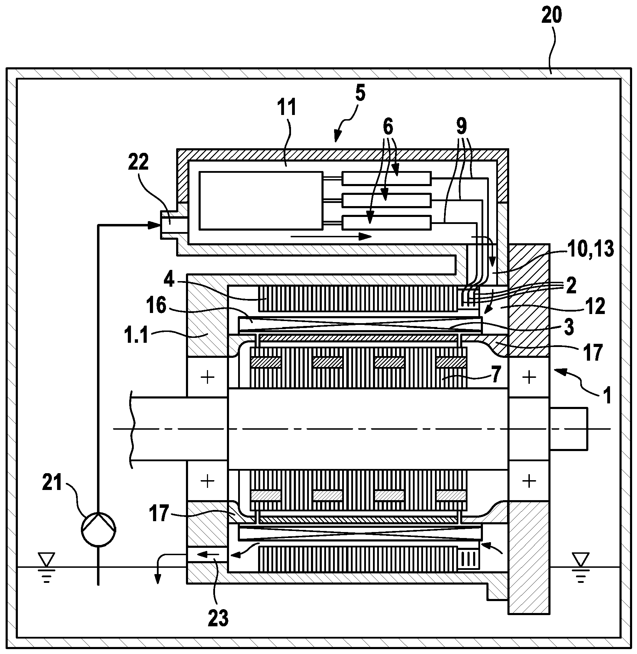

Ein Ausführungsbeispiel der Erfindung ist in der Zeichnung vereinfacht dargestellt und in der nachfolgenden Beschreibung näher erläutert.

### Beschreibung des Ausführungsbeispiels

Die Zeichnung zeigt im Schnitt eine Kühleinrichtung für eine elektrische Maschine.

Die elektrische Maschine 1 der Kühleinrichtung weist mehrere Phasenleiter 2 auf, die jeweils einer elektrischen Phase zugeordnet sind und an denen jeweils Spulenwicklungen 3 eines Stators 4 der elektrischen Maschine 1 elektrisch angeschlossen sind. Die mehreren Phasenleiter 2 der elektrischen Maschine 1 sind beispielsweise nebeneinander in einer ringförmigen Phasenleiteranordnung zusammengefasst und gegeneinander elektrisch isoliert. Desweiteren umfasst die elektrische Maschine 1 einen Rotor 7 und eine Leistungselektronik 5 mit elektronischen Bauelementen 6 zur Bereitstellung einer Hochspannung für die elektrische Maschine 1. Die elektronischen Bauelemente 6 bilden sogenannte Leistungsmodule, die der Umwandlung der Stromart, beispielsweise Gleichstrom, einer elektrischen Quelle der elektrischen Maschine 1 in die für die elektrische Maschine 1 geeignete Stromart, beispielsweise Wechselstrom, dienen.

Die elektronischen Bauelemente 6 sind jeweils über eine Phasenanschlussleitung 9 mit einem der Phasenleiter 2 der elektrischen Maschine 1 elektrisch verbunden. Dazu verlaufen die Phasenanschlussleitungen 9 durch einen in ein Gehäuse 1.1 der elektrischen Maschine 1 führenden Kabelkanal 10.

Die Leistungselektronik 5 und die elektrische Maschine 1 werden jeweils über einen Kühlkanal 11,12 mit Kühlfluid gekühlt. Die Leistungselektronik 5 kann beispielsweise beidseitig von dem Kühlmedium umströmt und gekühlt werden. Zwischen den Kühlkanälen 11,12 ist eine Kühlkanalverbindung 13 vorgesehen.

Erfindungsgemäß ist vorgesehen, dass die Kühlkanalverbindung 12 durch den Kabelkanal 10 führt, derart, dass die Phasenanschlussleitungen 9 vom Kühlmedium umströmbar sind. Auf diese Weise wird eine Kühlung der Phasenanschlussleitungen 9 erreicht.

Der Kühlkanal 11 der Leistungselektronik 5 und der Kühlkanal 12 der elektrischen Maschine 1 sind zu einem gemeinsamen Kühlkanal in Reihe hintereinander geschaltet, so dass die Kühlkanäle 11,12 jeweils Abschnitte des gleichen Kühlkanals 11,12 bilden.

Der gemeinsame Kühlkanal 11,12 führt an den elektronischen Bauelementen 6 der Leistungselektronik 5 entlang durch den Kabelkanal 10,13 in die elektrische Maschine 1 und verläuft in der elektrischen Maschine 1 durch Nuten 16 des Stators 4 der elektrischen Maschine 1, wobei die Nuten 16 die Spulenwicklungen 3 des Stators 4 enthalten. Das Kühlfluid wird über an den Stirnenden des Stators 4 angeordnete ringförmige Leitelemente 17 in die Nuten des Stators 4 geleitet.

Das Kühlmedium ist ein Öl, insbesondere ein Getriebeöl. Da Öl elektrisch nicht leitend ist, ist es möglich, dass die im Kabelkanal 10 liegenden Phasenanschlussleitungen 9 elektrisch nicht isoliert sind und von dem Öl umströmt sind.

Die Kühleinrichtung der elektrischen Maschine 1 umfasst weiterhin ein Getriebe 20. Die elektrische Maschine 1 kann von außen an das Getriebe 20 angeflanscht oder in dem Getriebe 20 angeordnet sein. Der gemeinsame Kühlkanal 11,12 ist Teil eines Kühlkreises, der eine Kühlpumpe 21 umfasst, die Öl aus dem Getriebe 20 ansaugt und über eine Einlassöffnung 22 in den gemeinsamen Kühlkanal 11,12 fördert. Dabei wird vorzugsweise zunächst die Leistungselektronik 5 und danach die elektrische Maschine 1 durchströmt. Nach Durchlaufen der elektrischen Maschine 1 mündet der gemeinsame Kühlkanal 11,12 über eine Auslassöffnung 23 der elektrischen Maschine 1 in das Getriebe 20.

## Patentansprüche

1. Elektrische Maschine mit einem Gehäuse (1.1), mit mehreren Phasenleitern (2), an denen jeweils Spulenwicklungen (3) der elektrischen Maschine (1) elektrisch angeschlossen sind, und mit elektronischen Bauelementen (6) einer Leistungselektronik (5) zur Bereitstellung einer Hochspannung für die elektrische Maschine (1), wobei die elektronischen Bauelemente (6) jeweils mit einem der Phasenleiter (2) der elektrischen Maschine (1) elektrisch verbunden sind, wobei eine Kühlkanalverbindung (13) zwischen einem Kühlkanal (12) der elektrischen Maschine (1) und einem Kühlkanal (11) der Leistungselektronik (5) vorgesehen ist, wobei der Kühlkanal (11) der Leistungselektronik (5) außerhalb des Gehäuses (1.1) der elektrischen Maschine vorgesehen ist,
die elektronischen Bauelemente (6) jeweils über eine Phasenanschlussleitung (9) mit einem der Phasenleiter (2) der elektrischen Maschine (1) elektrisch verbunden sind, wobei ein in das Gehäuse (1.1) der elektrischen Maschine (1) führender Kabelkanal (10) vorgesehen ist und die Phasenanschlussleitungen (9) durch den Kabelkanal (10) in Richtung der Längserstreckung des Kabelkanals (10) verlaufen, wobei der Kühlkanal (11) der Leistungselektronik (5) und der Kühlkanal (12) der elektrischen Maschine (1) zu einem gemeinsamen Kühlkanal (11,12) in Reihe hintereinander geschaltet sind, wobei das Kühlmedium ein Öl ist, **dadurch gekennzeichnet, dass** die Kühlkanalverbindung (13) derart durch den Kabelkanal (10) führt, dass die Phasenanschlussleitungen (9) vom Kühlmedium umströmbar sind.

2. Elektrische Maschine nach Anspruch 1, **dadurch gekennzeichnet, dass** der gemeinsame Kühlkanal (11,12) an den elektronischen Bauelementen (6) der Leistungselektronik (5) entlangführt und in der elektrischen Maschine (1) durch Nuten (16) eines Stators (4) der elektrischen Maschine (1) verläuft.

3. Elektrische Maschine nach einem der vorhergehenden Ansprüche **dadurch gekennzeichnet, dass** das Kühlmedium ein Getriebeöl ist.

4. Elektrische Maschine nach Anspruch 1, **dadurch gekennzeichnet, dass** die Phasenanschlussleitungen (9) elektrisch nicht isoliert sind.

5. Elektrische Maschine nach einem der vorhergehenden Ansprüche, **dadurch gekennzeichnet, dass** die mehreren Phasenleiter (2) der elektrischen Maschine (1) nebeneinander in einer ringförmigen Phasenleiteranordnung zusammengefasst und gegeneinander elektrisch isoliert sind.

6. Kühleinrichtung für eine elektrische Maschine (1), mit einem Getriebe (20) und einer elektrischen Maschine (1) nach einem der vorhergehenden Ansprüche, **dadurch gekennzeichnet, dass** der gemeinsame Kühlkanal (11,12) Teil eines Kühlkreises ist, der eine Kühlpumpe (21) umfasst, die Öl aus dem Getriebe (20) ansaugt und zum Kühlen in den gemeinsamen Kühlkanal (11,12) fördert.

7. Kühleinrichtung nach Anspruch 6, **dadurch gekennzeichnet, dass** der gemeinsame Kühlkanal (11,12) nach Durchlaufen der elektrischen Maschine (1) in das Getriebe (20) mündet.

## Claims

1. Electric machine having a housing (1.1), having a plurality of phase conductors (2) to which respective coil windings (3) of the electric machine (1) are electrically connected, and having electronic components (6) of a power electronics system (5) for supplying a high voltage for the electric machine (1), wherein the electronic components (6) are respectively electrically connected to one of the phase conductors (2) of the electric machine (1), wherein a cooling channel connection (13) is provided between a cooling channel (12) of the electric machine (1) and a cooling channel (11) of the power electronics system (5),
wherein
the cooling channel (11) of the power electronics system (5) is provided outside of the housing (1.1) of the electric machine,
the electronic components (6) are respectively electrically connected to one of the phase conductors (2) of the electric machine (1) via a phase connection line (9),
wherein a cable channel (10) leading into the housing (1.1) of the electric machine (1) is provided and the phase connection lines (9) run through the cable channel (10) in the direction of the longitudinal extent of the cable channel (10), wherein the cooling channel (11) of the power electronics system (5) and the cooling channel (12) of the electric machine (1) are connected in series behind one another to form a joint cooling channel (11, 12), wherein the cooling medium is an oil, **characterized in that** the cooling channel connection (13) leads through the cable channel (10) in such a way that cooling medium can flow around the phase connection lines (9) .

2. Electric machine according to Claim 1, **characterized in that** the joint cooling channel (11, 12) leads along the electronic components (6) of the power electronics system (5) and runs in the electric machine (1) through grooves (16) of a stator (4) of the electric machine (1).

3. Electric machine according to either of the preceding claims, **characterized in that** the cooling medium is a transmission oil.

4. Electric machine according to Claim 1, **characterized in that** the phase connection lines (9) are not electrically insulated.

5. Electric machine according to one of the preceding claims, **characterized in that** the plurality of phase conductors (2) of the electric,machine (1) are combined next to one another in an annular phase conductor arrangement and are electrically insulated from one another.

6. Cooling device for an electric machine (1), having a transmission (20) and an electric machine (1) according to one of the preceding claims, **characterized in that** the joint cooling channel (11, 12) is part of a cooling circuit, which comprises a cooling pump (21), which suctions oil from the transmission (20) and conveys said oil into the joint cooling channel (11, 12) for the purpose of cooling.

7. Cooling device according to Claim 6, **characterized in that** the joint cooling channel (11, 12) opens into the transmission (20) after passing through the electric machine (1).

## Revendications

1. Machine électrique comprenant un carter (1.1), comprenant plusieurs conducteurs de phase (2) auxquels sont respectivement raccordés électriquement des enroulements de bobine (3) de la machine électrique (1), et comprenant des composants électroniques (6) d'une électronique de puissance (5) destinée à fournir une haute tension pour la machine électrique (1), les composants électroniques (6) étant respectivement reliés électriquement à l'un des conducteurs de phase (2) de la machine électrique (1), une liaison de canaux de refroidissement (13) étant réalisée entre un canal de refroidissement (12) de la machine électrique (1) et un canal de refroidissement (11) de l'électronique de puissance (5),
le canal de refroidissement (11) de l'électronique de puissance (5) se trouvant en-dehors du carter (1.1) de la machine électrique,
les composants électroniques (6) étant respectivement reliés électriquement à l'un des conducteurs de phase (2) de la machine électrique (1) par le biais d'une ligne de raccordement de phase (9),
un conduit de câble (10) menant dans le carter (1.1) de la machine électrique (1) étant présent et les lignes de raccordement de phase (9) s'étendant à travers le conduit de câble (10) dans le sens de la projection longitudinale du conduit de câble (10), le canal de refroidissement (11) de l'électronique de puissance (5) et le canal de refroidissement (12) de la machine électrique (1) étant branchés en série l'un derrière l'autre en un canal de refroidissement commun (11, 12), le fluide de refroidissement étant une huile,
**caractérisée en ce que**
la liaison de canaux de refroidissement (13) passe à travers le conduit de câble (10) de telle sorte que le courant de fluide de refroidissement peut passer autour des lignes de raccordement de phase (9).

2. Machine électrique selon la revendication 1, **caractérisée en ce que** le canal de refroidissement commun (11, 12) passe le long des composants électroniques (6) de l'électronique de puissance (5) et s'étend dans la machine électrique (1) à travers des rainures (16) d'un stator (4) de la machine électrique (1).

3. Machine électrique selon l'une des revendications précédentes, **caractérisée en ce que** le fluide de refroidissement est une huile d'engrenage.

4. Machine électrique selon la revendication 1, **caractérisée en ce que** les lignes de raccordement de phase (9) ne sont pas isolées électriquement.

5. Machine électrique selon l'une des revendications précédentes, **caractérisée en ce que** les plusieurs conducteurs de phase (2) de la machine électrique (1) sont regroupés les uns à côté des autres dans un arrangement de conducteurs de phase annulaire et sont isolés électriquement les uns des autres.

6. Dispositif de refroidissement pour une machine électrique (1), comprenant une boîte de transmission (20) et une machine électrique (1) selon l'une des revendications précédentes, **caractérisé en ce que** le canal de refroidissement commun (11, 12) fait partie d'un circuit de refroidissement qui comporte une pompe de refroidissement (21), laquelle aspire de l'huile de la boîte de transmission (20) et la refoule dans le canal de refroidissement commun (11, 12) en vue du refroidissement.

7. Dispositif de refroidissement selon la revendication 6, **caractérisé en ce que** le canal de refroidissement commun (11, 12) débouche dans la boîte de transmission (20) après être passé à travers la machine électrique (1).
